# EUROPÄISCHE PATENTSCHRIFT

(11) **EP 2 401 174 B1**
(45) Veröffentlichungstag und Bekanntmachung des Hinweises auf die Patenterteilung: **27.12.2017**
(21) Anmeldenummer: 10709684.4
(22) Anmeldetag: 19.02.2010
(51) Int. Cl.: B60N 2/02, H02K 7/116, B60N 2/16

(54) **HÖHENVERSTELLUNG MIT EINEM MEHRTEILIG AUSGEFÜHRTEN ABTRIEBSMITTEL**
HEIGHT ADJUSTABLE DEVICE COMPRISING MULTI-PART OUTPUT MEANS
DISPOSITIF DE RÉGLAGE EN HAUTEUR COMPRENANT UN MOYEN DE SORTIE EN PLUSIEURS PIÈCES

(30) Priorität: 27.02.2009 DE 102009010689
(43) Veröffentlichungstag der Anmeldung: 04.01.2012
(73) Patentinhaber: Adient Luxembourg Holding S.à r.l., 2453 Luxembourg (LU)
(72) Erfinder: BREITFELD, Uwe, 40223 Düsseldorf (DE); TRIEBENECK, Frank, 72622 Nürtingen (DE)
(74) Vertreter: Schwöbel, Thilo K.
(86) Internationale Anmeldenummer: PCT/EP2010/001055
(87) Internationale Veröffentlichungsnummer: WO 2010/097184

(56) Entgegenhaltungen:
- EP-A2- 1 084 897
- EP-A2- 2 003 357
- WO-A1-2008/028591
- DE-A1- 3 519 058
- DE-A1- 19 641 372
- DE-A1-102007 037 712
- FR-A1- 2 896 195

## Beschreibung

Die vorliegende Erfindung betrifft einen Fahrzeugsitz mit einem Verstellelement, das ein Abtriebsmittel mit einem Antriebszahnrad und einem Abtriebszahnrad aufweist, die drehfest miteinander verbunden sind, wobei das Abtriebszahnrad mit einem Verstellmittel form- und/oder kraftschlüssig zusammenwirkt.

Fahrzeugsitze wie sie beispielsweise in dem oder in der FR 2 896 195 oder WO-A-2008/028591 offenbart werden, weisen heutzutage oftmals eine Höhenverstellung auf, mit der die Höhe der Sitzfläche motorisch oder manuell verstellt werden kann. Diese Höhenverstellungen sind jedoch oftmals vergleichsweise schwer und erhöhen somit den Energieverbrauch des Fahrzeugs.

Es war deshalb die Aufgabe der vorliegenden Erfindung einen Fahrzeugsitz zur Verfügung zu stellen, der die Nachteile des Standes der Technik nicht aufweist.

Gelöst wird die Aufgabe mit einem Fahrzeugsitz gemäß Anspruch 1. Die vorliegende Erfindung betrifft ein Fahrzeugsitz. Bei diesem Fahrzeugsitz kann es sich um den Fahrer- oder Beifahrersitz aber auch um einen in den rückwärtigen Sitzreihen angeordneten Sitz handeln. Ein derartiger Sitz kann einer oder mehreren Personen Platz bieten. Bei dem erfindungsgemäßen Fahrzeugsitz kann es sich folglich auch um eine Sitzbank handeln.

Erfindungsgemäß weist dieser Fahrzeugsitz ein Verstellelement auf, mit dem ein Teil des Sitzes relativ zu einem anderen Teil des Sitzes und/oder relativ zu der Karosserie des Fahrzeuges verstellbar ist. Vorzugsweise wird mit diesem Verstellelement die Höhe und/oder die Neigung des Sitzteils des Fahrzeugsitzes an den jeweiligen Sitzinsassen angepasst. Dieses Verstellelement weist ein Abtriebsmittel auf, das mit einem Antriebszahnrad und einem Abtriebszahnrad versehen ist, die drehfest miteinander verbunden sind. Das Abtriebszahnrad wirkt erfindungsgemäß mit einem Verstellmittel beispielsweise mit einem Beschlag des Fahrzeugsitzes form- und/oder kraftschlüssig zusammen. Bei einer Sitzhöhen- oder Sitzneigungsverstellung ist dieser Beschlag beispielsweise drehbar an der Fahrzeugkarosserie angeordnet und weist vorzugsweise einen Zahnkranz auf, der form- und/oder kraftschlüssig mit dem Abtriebszahnrad zusammenwirkt.

Erfindungsgemäß sind nun das Antriebszahnrad und das Abtriebszahnrad mehrstückig vorgesehen, d.h. es handelt sich um mindestens zwei Teile. Insbesondere ist zwischen dem Abtriebszahnrad und dem Antriebszahnrad ein Abstand vorgesehen. Dieser Abstand wird vorzugsweise mit einem Verbindungselement überbrückt, mit dem sowohl das Antriebszahnrad als auch das Abtriebszahnrad form-, kraft- und/oder stoffschlüssig verbunden ist.

Erfindungsgemäß handelt es sich bei dem Verbindungselement um ein Rohr. Ein Rohr im Sinne der Erfindung ist ein innen hohles, vergleichsweise dünnwandiges Element, das einen beliebigen Querschnitt aufweisen kann. Vorzugsweise weist das Rohr jedoch einen zumindest im Wesentlichen runden Querschnitt auf.

Erfindungsgemäß handelt es sich bei dem Verbindungselement um eine Sollverformungsstelle, die sich bei einem Unfall verformt und dabei Energie dissipiert. Dadurch werden beispielsweise die Zähne der Zahnräder nicht soweit deformiert oder abgeschert, dass es zu einer unkontrollierten Bewegung des Sitzes kommt. Durch die Vorsehung des Verbindungselementes als Sollverformungselement wird die Sicherheit des erfindungsgemäßen Fahrzeugsitzes wesentlich erhöht und eine Verletzung der Fahrzeuginsassen vermieden.

In einer bevorzugten Ausführungsform der vorliegenden Erfindung wird das Abtriebszahnrad mittels Kaltfließpressen und/oder Feinstanzen hergestellt.

Gemäß einer weiteren bevorzugten Ausführungsform der vorliegenden Erfindung wird das Antriebszahnrad mittels Kaltfließpressen und/oder Feinstanzen hergestellt.

Weiterhin bevorzugt ist das Verstellelement ein Sitzhöhenversteller, mit dem die Sitzfläche und die Rückenlehne des erfindungsgemäßen Fahrzeugsitzes in seiner Höhe und/oder seiner Neigung verstellt wird.

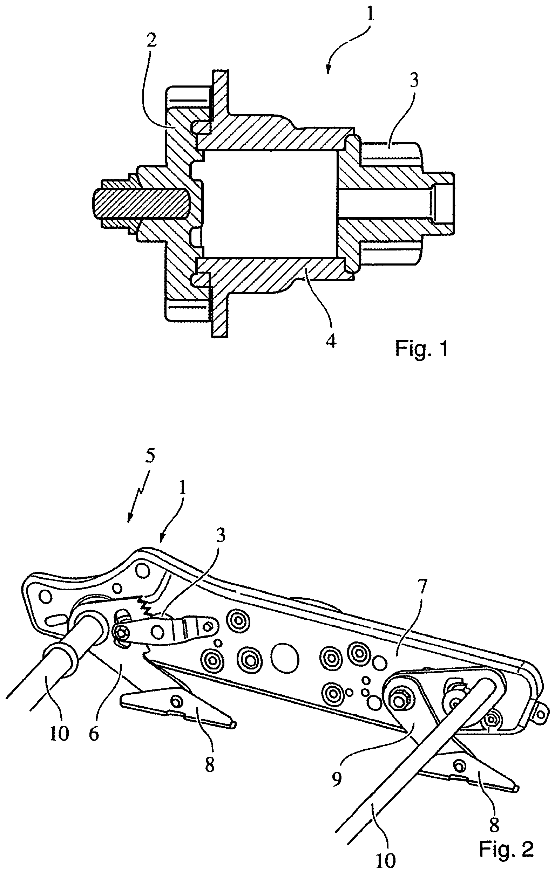

Im Folgenden wird die Erfindung anhand der Figuren 1 und 2 erläutert. Diese Erläuterungen sind lediglich beispielhaft und schränken den allgemeinen Erfindungsgedanken nicht ein.
- **Figur 1**: zeigt das Abtriebsmittel.
- **Figur 2**: zeigt ausschnittsweise den erfindungsgemäßen Fahrzeugsitz.

Figur 1 zeigt das Abtriebsmittel des erfindungsgemäßen Fahrzeugsitzes. Dieses weist ein Antriebszahnrad 2 und ein Abtriebszahnrad 3 auf. Diese beiden Zahnräder sind durch ein Verbindungselement 4, hier ein Rohr, mit einem kreisrunden Querschnitt drehfest miteinander verbunden. Dadurch, dass das Rohr einen innen hohlen Querschnitt aufweist, ergibt sich eine signifikante Gewichtsersparnis. In dem vorliegenden Fall ist das Rohr als Solldeformationselement ausgelegt, das sich im Falle eines Unfalls verbiegt oder tordiert und dadurch Unfallenergie dissipiert. Dadurch werden unzulässig große Beschädigungen an den Zahnrädern 2, 3 verhindert, die zu einer unkontrollierten Bewegung des Fahrzeugsitzes führen könnten. Beispielsweise wird dadurch verhindert, dass die Zähne der Zahnräder 2 und/oder 3 abscheren. In dem vorliegenden Fall ist das Abtriebszahnrad 3 durch Kaltfließpressen und das Antriebszahnrad 2 mittels Feinstanzen hergestellt. Das Abtriebsmittel ist in dem vorliegenden Fall Teil einer Höhenverstellung, bei der eine Rotationsbewegung manuell und/oder motorisch auf das Zahnrad 2 aufgebracht und durch das Verbindungselement 4 auf das Zahnrad 3 übertragen wird. Dieses Zahnrad 3 wirkt dann beispielsweise mit einem Beschlagsteil (siehe Figur 2) zusammen, d.h. es rollt daran ab und bewegt dadurch den Fahrzeugsitz rauf oder runter und/oder verstellt die Neigung der Sitzfläche.

Dieser Zusammenhang ist noch etwas besser in Figur 2 zu erkennen, in der eins der beiden Seitenteile 7 eines Fahrzeugsitzes sowie die beiden Querstrebend 10, die sich zwischen den Seitenteilen 7 befinden, dargestellt sind. Die hintere Querstrebe ist an dem Beschlagsteil 6 gelagert. Im vorderen Bereich ist das Seitenteil 7 mittels des Hebelarms 9 gelagert. Sowohl das Beschlagsteil 6 als auch der Hebelarm 9 sind jeweils drehbar mittels Lagern 8 mit der Fahrzeugkarosserie verbunden. Desweiteren ist in dieser Darstellung das Abtriebszahnrad 3 des Abtriebsmittels 1 zu erkennen, das form- und/oder kraftschlüssig mit einem Zahnkranz, der sich an dem Beschlagsteil 6 befindet zusammenwirkt. Durch Drehen des Abtriebszahnrades 3 rollt dieses an dem Zahnkranz ab und bewegt das Beschlagsteil 6 im- oder gegen den Uhrzeigersinn. Dadurch wird der Fahrzeugsitz angehoben oder abgesenkt. Das Abtriebszahnrad 3 ist Teil des Antriebsmittels 1, das in Figur 1 dargestellt ist.

### Bezugszeichenliste:

- 1: Abtriebsmittel
- 2: Antriebszahnrad
- 3: Abtriebszahnrad
- 4: Verbindungselement, Rohr
- 5: Verstellelement, Höhenversteller
- 6: Beschlagsteil
- 7: Seitenplatte
- 8: Drehlager
- 9: Hebelarm
- 10: Querstreben

## Patentansprüche

1. Fahrzeugsitz mit einem Verstellelement (5), das ein Abtriebsmittel (1) mit einem Antriebszahnrad (2) und einem Abtriebszahnrad (3) aufweist, die miteinander drehfest verbunden sind, wobei das Abtriebszahnrad (3) mit einem Verstellmittel (6) form- und/oder kraftschlüssig zusammenwirkt, wobei das Antriebszahnrad und das Abtriebszahnrad (3) mehrstückig vorgesehen sind
, **dadurch gekennzeichnet, dass** zwischen dem Antriebszahnrad (2) und dem Abtriebszahnrad (3) ein Verbindungselement (4) angeordnet ist,
dass das Verbindungselement rohrförmig gestaltet ist,
und dass das Verbindungselement als Sollverformungselement ausgelegt ist.

2. Fahrzeugsitz nach Anspruch 1, **dadurch gekennzeichnet, dass** das Abtriebszahnrad (3) mittels Kaltfließpressen und/oder Feinstanzen hergestellt ist.

3. Fahrzeugsitz nach einem der voranstehenden Ansprüche, **dadurch gekennzeichnet, dass** das Antriebszahnrad (2) mittels Kaltfließpressen und/oder Feinstanzen hergestellt ist.

4. Fahrzeugsitz nach einem der voranstehenden Ansprüche, **dadurch gekennzeichnet, dass** das Verstellelement ein Sitzhöhenversteller ist.

## Claims

1. Vehicle seat with an adjusting element (5) which has an output means (1) with a driving gearwheel (2) and an output gearwheel (3), which are connected to each other for conjoint rotation, wherein the output gearwheel (3) interacts with an adjusting means (6) in an interlocking and/or frictional manner, wherein the driving gearwheel and the output gearwheel (3) are provided in multiple pieces,
**characterized in that** a connecting element (4) is arranged between the driving gearwheel (2) and the output gearwheel (3),
**in that** the connecting element is of tubular design, and **in that** the connecting element is configured as a predetermined deformation element.

2. Vehicle seat according to Claim 1, **characterized in that** the output gearwheel (3) is produced by means of cold extrusion and/or precision punching.

3. Vehicle seat according to either of the preceding claims, **characterized in that** the driving gearwheel (2) is produced by means of cold extrusion and/or precision punching.

4. Vehicle seat according to one of the preceding claims, **characterized in that** the adjusting element is a seat height adjuster.

## Revendications

1. Siège de véhicule comprenant un élément de réglage (5) qui présente un moyen de prise de force (1) avec une roue dentée d'entraînement (2) et une roue dentée de prise de force (3) qui sont en liaison l'une avec l'autre de manière solidaire en rotation, la roue dentée de prise de force (3) coopérant avec un moyen de réglage (6) par engagement par correspondance de formes et/ou par force, la roue dentée d'entraînement et la roue dentée de prise de force (3) étant prévues sous forme de plusieurs pièces,
**caractérisé en ce qu'**entre la roue dentée d'entraînement (2) et la roue dentée de prise de force (3) est disposé un élément de liaison (4), **en ce que** l'élément de liaison est configuré sous forme tubulaire,
et **en ce que** l'élément de liaison est conçu sous forme d'élément à déformation de consigne.

2. Siège de véhicule selon la revendication 1, **caractérisé en ce que** la roue dentée de prise de force (3) est fabriquée par extrusion à froid et/ou découpage de précision.

3. Siège de véhicule selon l'une quelconque des revendications précédentes, **caractérisé en ce que** la roue dentée d'entraînement (2) est fabriquée par extrusion à froid et/ou découpage de précision.

4. Siège de véhicule selon l'une quelconque des revendications précédentes, **caractérisé en ce que** l'élément de réglage est un dispositif de réglage en hauteur du siège.
